# EUROPÄISCHE PATENTSCHRIFT

(11) **EP 0 621 448 B1**
(45) Veröffentlichungstag und Bekanntmachung des Hinweises auf die Patenterteilung: **17.09.1997**
(21) Anmeldenummer: 94105996.6
(22) Anmeldetag: 18.04.1994
(51) Int. Cl.: F23G 5/00, F23B 1/14, F23L 1/02, F23L 9/02, F23G 5/50, F23N 1/02

(54) **Verfahren zum Verbrennen von Brennstoffen, insbesondere Abfall**
Method for the combustion of fuels, particularly waste
Procédé pour la combustion de combustibles, en particulier de déchets

(30) Priorität: 20.04.1993 DE 4312820
(43) Veröffentlichungstag der Anmeldung: 26.10.1994
(73) Patentinhaber: MARTIN GmbH für Umwelt- und Energietechnik, D-80807 München (DE)
(72) Erfinder: Martin, Johannes, Dipl.-Ing., D-81929 München (DE); Horn, Joachim, Dipl.-Ing., D-80636 München (DE); Busch, Michael, Dipl.-Ing., D-83026 Rosenheim i.Obb. (DE)
(74) Vertreter: Zmyj, Erwin, Dipl.-Ing., Dipl.-Wirtsch.-Ing.

(56) Entgegenhaltungen:
- DE-A- 1 751 133
- DE-A- 3 825 931
- DE-A- 4 027 908
- DE-B- 1 019 788
- PATENT ABSTRACTS OF JAPAN vol. 8, no. 148 (M-308) (1585) 11. Juli 1984 & JP-A-59 044 513 (HITACHI ZOSEN) 13. März 1984

## Beschreibung

Die Erfindung bezieht sich auf ein Verfahren zum Verbrennen von Brennstoffen, insbesondere Abfall, in Verbrennungsanlagen mit einer Rostfeuerung, bei dem Primärluft unterhalb der Rostfeuerung in die Brennstoffschicht und Sekundärluft oberhalb der Brennstoffschicht zugeführt wird.

Verfahren dieser allgemeinen Art sind seit langem bekannt.

Die Verbrennung von Abfällen muß aufgrund politischer Zielvorgaben so erfolgen, daß die Belastung der Umwelt weitestgehend vermieden wird. Die bisher übliche Vorgehensweise zur Erlangung dieses Zieles ist die Optimierung des Verbrennungsvorganges auf dem Feuerungsrost durch gezielte Zuführung der Verbrennungsluft hinsichtlich Menge und Verteilung längs des Feuerungsrostes und auch im Bereich der Sekundärverbrennungszone sowie die Anwendung immer umfangreicherer und aufwendigerer Einrichtungen zur nachgeschalteten Gasreinigung. Dies hat zwar bereits zur drastischen Verringerung der Emissionen solcher Anlagen geführt, bewirkte jedoch auch ein starkes Ansteigen der Entsorgungskosten, die mit dem Betrieb dieser Anlagen verbunden sind und eine weit überproportionale Ausdehnung der Abgasreinigung gegenüber dem konventionellen Anlagenteil bestehend aus Feuerung und Energienutzung, z.B. Dampferzeugung. In der Zwischenzeit ist ein Standard bei Abgasreinigungsanlagen erreicht worden, der eine weitere Verbesserung der Abscheideleistung nur noch unter Inkaufnahme sehr hoher Zusatzkosten erwarten läßt, da Reinigungswirkungsgrade von 99% erreicht werden. Erfahrungsgemäß besteht eine exponentielle Abhängigkeit zwischen Aufwand und Reinigungsleistung, so daß zur weiteren Steigerung des Reinigungswirkungsgrades der technische Einsatz nicht mehr vertretbar ist. Mit den zur Zeit bekannten Maßnahmen ist die technisch vertretbare Grenze der Reinigung der Abgase erreicht. Vor allem in den letzten Jahren wurde zusätzlich versucht, durch Beeinflussung des Verbrennungsprozesses weitere Verbesserungen zu erreichen.

Aus der DE 39 15 992 A1 ist bekannt, wie die Entstehung von Stickstoffoxiden verhindert werden kann, um damit Einsparungen bei den nachgeschalteten Reinigungsanlagen zu ermöglichen. Das Grundprinzip dieses bekannten Verfahrens besteht darin, in erster Linie die Primärluft durch Beimischen von rückgeführten Abgasen aus dem Verbrennungsprozess in ihrem Sauerstoffgehalt so zu verändern, daß die Verbrennung auf dem Rost in einer gedämpften Form abläuft mit dem Ziel, in den Flammenspitzen keine höhere Temperatur als 1.300°C zu erreichen, weil bekannt ist, daß oberhalb dieser Temperatur die Bildung von Stickstoffoxiden in starkem Maße einsetzt. Bei diesem bekannten Verfahren wird die Sekundärluft in zwei Stufen übereinandergeschichtet eingeführt, wobei in der unteren Stufe im wesentlichen rückgeführtes Abgas eingeführt wird, um eine Turbulenz zu erzeugen, während in der zweiten Stufe Umgebungsluft zugeführt wird, um den notwendigen Ausbrand der Abgase zu erzielen. Bei dieser gezielten Verlangsamung der Verbrennungsreaktionen tritt jedoch eine deutliche Verschlechterung des Zündens fester Abfallbestandteile auf dem Verbrennungsrost ein. Als direkte Folge erhöht sich der Anteil an unverbrannten Stoffen im Verbrennungsrückstand und die Möglichkeit des Einbindens von Schadstoffen in den Rückstand d.h. in der Schlacke verschlechtert sich aufgrund der niedrigeren Brennbettemperaturen. Bei diesem Verfahren wird somit zwar der Anteil an Stickoxiden vermindert, der Anteil an verbrennbaren Schadstoffen wegen Verringerung des Oxydationspotentials aber erhöht.

Bei einem anderen bekannten Verfahren nach der DE 40 27 908 A1 wird sowohl bei der Primärverbrennungsluft als auch bei der Sekundärverbrennungsluft der Sauerstoffanteil variiert, wobei dieses Variieren von einer Erhöhung des Sauerstoffanteils gegenüber der Umgebungsluft bis zu einem Absenken des Sauerstoffanteils gegenüber der Umgebungsluft reicht. Dieses Variieren des Sauerstoffanteils sowohl bei der Primärverbrennungsluft als auch bei der Sekundärverbrennungsluft wird allein zu dem Zweck vorgenommen, den für die Verbrennung an den einzelnen Stellen der Verbrennungsanlage notwendigen Sauerstoffbedarf möglichst exakt einzustellen. Hierdurch soll ein guter Ausbrand erzielt und die vorgeschriebene Restsauerstoffmenge nicht unterschritten werden. Hierfür wird der in einer Luftzerlegungsanlage gewonnene Sauerstoff und der dort ebenfalls gewonnene Stickstoff verwendet, um durch Zuführung von Sauerstoff den Sauerstoffanteil zu erhöhen und durch Zuführen von Stickstoff den Sauerstoffanteil in der Verbrennungsluft abzusenken. Diese Vorgehensweise kann in wesentlichen Bereichen der Feuerung bzw. des Feuerraumes den Verbrennungsablauf verbessern, führt jedoch nicht zu einer Verringerung des sich ergebenden Abgasvolumenstromes durch die Gesamtanlage und vor allem auch nicht in der Abgasreinigungsanlage.

Aus Patent Abstracts of Japan, vol. 8, No. 148 (M-308) (1585), 11. Juli 1984, ist die Rückführung von Abgas über Sekundärluftdüsen bekannt. Bei diesem bekannten Verbrennungsverfahren wird jedoch die Primärverbrennungsluft gedrosselt, um eine Vergasung der Abfälle auf dem Rost zu beschleunigen und so die Bildung von Stickoxiden zu unterdrücken.

Die DE-A-1 751 133 beschreibt ein Verbrennungsverfahren, bei welchem die Verbrennungsluft insgesamt, und zwar über die gesamte Rostlänge mit Sauerstoff angereichert wird, um alle Geruchsstoffe zu verbrennen. Eine Sekundärverbrennungszone ist bei diesem Verfahren nicht vorgesehen.

Aus der DE-B-1 019 788 ist es bekannt, das Abgas aus einem Bereich abzuziehen, in welchem noch ein sehr hoher Anteil an unverbrauchtem Sauerstoff vorliegt, wobei dieses abgezogene Abgas den Sekundärluftdüsen zugeführt wird. Hierdurch wird in Verbindung mit einer bestimmten Luftzuführung eine große mischende Tiefenwirkung erzielt, um bei geringem Luftüberschuß eine vollständige Verbrennung in der Sekundärverbrennungszone bei hohen Temperaturen zu erzielen.

Bisher wird bei der Bewertung der Umweltrelevanz von Abfallverbrennungsanlagen meistens von der Konzentration der Schadstoffe im Abgas ausgegangen. Die derzeit gültigen Emissionsrichtlinien, nämlich die 17. Bundesimissionsschutzverordnung bzw. die EG-Richtlinie zur Verbrennung von Abfällen, wie auch die Vorläuferverordnungen hierzu, regeln die Auflagen an solchen Anlagen durch konzentrationsbezogene Grenzwerte. Diese Betrachtungsweise gibt jedoch die Schadstoffabgabe in die Umwelt nur unvollständig wieder, da nur relative nicht aber tatsächliche Mengen erkennbar sind, die eine Emissionsquelle verlassen. Umfassender dagegen beschreibt die Bewertung der Schadstoff-Fracht die ökologische Bedeutung einer Emissionsquelle.

Die Erfahrungen aus der Praxis moderner Abgasreinigungsanlagen zeigen, daß die erreichbaren Schadstoff-Reingaskonzentrationen nahezu nicht mehr von den Schadstoffkonzentrationen vor der Abgasreinigung abhängen, sondern die Konzentrationswerte am Ende der Abgasreinigung konstant bleiben. Dies erklärt sich aus dem bereits oben angedeuteten exponentiellen Zusammenhang zwischen Abscheidegrad und Aufwand bzw. Dimensionierung der einzusetzenden Aggregate.

Aufgabe der Erfindung ist es, über die bisher gewonnenen Erkenntnisse hinsichtlich des erreichbaren Reinigungswirkungsgrades hinaus, eine erhebliche Verminderung der in die Umwelt abgegebenen Schadstofffracht bei höherem technischen Wirkungsgrad und kleinerer Dimensionierung der der Verbrennung nachgeschalteten Aggregate zu erreichen.

Diese Aufgabe wird ausgehend von einem Verfahren zum Verbrennen von Brennstoffen der eingangs erwähnten Art erfindungsgemäß dadurch gelöst, daß die Verbrennungsintensität des Brennstoffes auf dem Feuerungsrost zumindest in Teilbereichen desselben durch Erhöhung des Sauerstoffanteiles der Primärluft auf 25 bis 50 Vol% bei gleichzeitiger Verminderungdes Stickstoffanteiles der Primärluft gegenüber der Umgebungsluft gesteigert wird und daß über der Brennstoffschicht, nachdem die Beseitigung oxidierbarer Schadstoffe weitgehend abgeschlossen ist, die Verbrennungsintensität in der Sekundärverbrennungszone durch Verminderung des Sauerstoffanteiles in der Sekundärluft gegenüber der Umgebungsluft durch zurückgeführtes Abgas gedrosselt wird, wobei die rückgeführte Abgasmenge 20 bis 65% der gesamten, von der dem Verbrennungsprozeß zugeführten Luft- und Gasmenge ausmacht.

Durch die teilweise erhebliche Erhöhung des Sauerstoffanteiles der Primärverbrennungsluft, was von den Reaktionszonen abhängt, wie z.B. ob es sich um die Anwärmzone, die Hauptverbrennungszone oder die Ausbrandzone handelt, wird zwangsläufig der Stickstoffanteil verringert, wodurch man bei erheblich gesteigerter Verbrennungsintensität zu einer starken Absenkung des benötigten Luftvolumens kommt, da der nur als Ballaststoff wirkende Stickstoff verringert wird. Damit wird bereits ein erhebliches Volumen bei der Verbrennungsluft eingespart, was nicht nur eine Verringerung der Dimensionierung der Primärluftgebläse und -kanäle, sondern insbesondere eine Verkleinerung der nachgeschalteten Aggregate wie Dampferzeuger, Abgasreinigung, Saugzug-Gebläse und Kamin ermöglicht. Die erhebliche Steigerung der Intensität der Primärverbrennung führt üblicherweise zu einer Erhöhung der Brennbettemperatur auf dem Verbrennungsrost und der Flammentemperatur in der Sekundärverbrennungszone. Während höhere Brennbettemperaturen den vorteilhaften Effekt eines verbesserten Ausbrandes der festen Brenngutteile und eine verbesserte Schadstoffeinbindung in die Verbrennungsasche aufgrund von Sinterungen haben, hat die erhöhte Sekundärverbrennungstemperatur die verstärkte Bildung von Stickstoffoxiden zur Folge (thermisches NOₓ). Bei dem einen eingangs erwähnten bekannten Verfahren wird der Verbrennungsvorgang bereits auf dem Feuerungsrost aus diesem Grund erheblich gedrosselt. Die Erfindung geht also zunächst einen Weg, der nach den bisherigen Erkenntnissen als falsch anzusehen wäre, indem zunächst die Verbrennung auf dem Feuerungsrost über das bisher übliche Maß angefacht wird, um damit eine erhebliche Mengenreduzierung der Primärluft, eine Verbesserung der Schlackenqualität und eine Verminderung der verbrennbaren, d.h. oxidierbaren Schadstoffe zu erreichen und korrigiert dann aber in der Sekundärverbrennungszone diesen Weg, damit es nicht zu der gesteigerten Bildung von Stickstoffoxiden kommt, deren Beseitigung einen erheblichen Aufwand nach sich ziehen würde. Hier setzt also die weitere Maßnahme nach der Erfindung ein, die darin besteht, den Verbrennungsprozeß oberhalb der Brennschicht zu Beginn der Sekundärbrennzone so zu drosseln, daß es nicht oder nur in stark vermindertem Ausmaß zu der üblicherweise einsetzenden Stickstoffoxidbildung kommt. Diese Dämpfungsmaßnahme setzt also in einem Zeitpunkt ein, in welchem die Beseitigung der oxidierbaren Schadstoffe durch den stark angefachten Verbrennungsprozeß bereits weitgehend abgeschlossen ist. Aus der starken Erhöhung des Sauerstoffanteiles in der Primärluft ist nach dem Durchtritt dieser Primärluft durch die Brennschicht immer noch genügend Sauerstoff vorhanden, um die gewünschte gedrosselte Verbrennung im Sekundärverbrennungsbereich zu ermöglichen, die so gesteuert ablaufen soll, daß diejenigen Temperaturen nicht eintreten, bei denen es zur Bildung von Stickstoffoxiden kommt. Um diese Drosselung zu erreichen, wird bei dem erfindungsgemäßen Verfahren zur Dämpfung der Nachverbrennung Abgas verwendet, welches hinsichtlich des Sauerstoffgehaltes erheblich reduziert ist. Durch die Verwendung von Abgas ist es also nicht mehr notwendig, zusätzliches sauerstoffarmes Gas bzw. inertes Gas zuzuführen, weshalb die Gasmenge trotz ausreichender Verbrennung im Sekundärverbrennungsbereich nicht mehr erhöht werden muß, wie dies bei den bisher bekannten Verfahren der Fall war, bei denen im Bereich der Sekundärverbrennungszone über Sekundärluftdüsen zusätzlich Verbrennungsluft in Form von Umgebungsluft zugeführt wurde. Selbst bei den Verfahren, bei denen keine reine Verbrennungsluft zugeführt wurde, ist dennoch die Gasmenge erhöht worden, weil ein Gemisch aus Umgebungsluft und Abgas bzw. inertem Gas, z.B. Stickstoff, zugeführt wurde, was die Gesamtmenge erhöht hat. Die Dämpfungsmaßnahmen in der Sekundärverbrennungszone werden also bei der vorliegenden Erfindung mit Hilfe von Abgasen erzeugt, die bei der Primärverbrennung, d.h. bei der Verbrennung der Brennschicht auf dem Feuerungsrost entstehen, so daß zusätzliche Gasmengen nicht mehr erforderlich sind.

Da nach der vorliegenden Erfindung die Verbrennungsintensität auf dem Feuerungsrost innerhalb der Primärverbrennungszone besonders stark gesteigert wird, verbleibt in der durch die Brennschicht hindurchgetretenen Luft noch genügend Sauerstoff für die Sekundärverbrennung, so daß gemäß einer weiteren Ausgestaltung der Erfindung die in der Sekundärverbrennungszone rückgeführten Abgase 20 bis 65%, vorzugsweise 35% der gesamten, von der dem Verbrennungsprozeß zugeführten Luft- und Gasmenge ausmachen können. Es kann also beispielsweise die gesamte Gasmenge, die durch die Sekundärluftdüsen eingeführt wird, aus rückgeführtem Abgas bestehen, wenn man davon ausgeht, daß vorzugsweise 35% der gesamten Luft- und Gasmenge als rückgeführte Abgase eingesetzt werden und die Sekundärluft 35% der gesamten Gasmenge ausmacht. Da es sich um zurückgeführtes Gas handelt, wird durch diese Maßnahme mehr als ein Drittel der gesamten Gasmenge eingespart, wenn man unterstellt, daß moderne Abfallverbrennungsanlagen in der Regel mit einer Aufteilung der Verbrennungsluft in 65% Primärluft und 35% Sekundärluft betrieben werden. Zusammen mit der Maßnahme der Sauerstofferhöhung in der Primärluft kann hierdurch insgesamt die Menge des durch die nachgeschalteten Aggregate strömenden Gase um zwei Drittel vermindert werden. Wenn aber, wie weiter oben festgestellt, die Konzentrationswerte der Schadstoffe am Ende der Abgasreinigung unabhängig von den Schadstoffkonzentrationen vor der Abgasreinigung sind, so kann durch die Verminderung des gesamten Gasvolumens bis zu zwei Drittel der anfallenden Menge die Schadstofffracht, d.h. die aus einer Emissionsquelle abgegebene Menge an Schadstoffen gegenüber bisher betriebenen Anlagen in einer Weise verringert werden, wie dies bei der trationellen Betriebsweise der Abfallverbrennungsanlagen wegen der eingangs erläuterten exponentiellen Aufwandssteigerung nicht möglich war.

Ausgehend von der oben erläuterten grundsätzlichen Lehre besteht eine spezielle Weiterbildung der Erfindung darin, daß der Sauerstoffgehalt der Primärluft örtlich in Abhängigkeit vom Abbrandverhalten bzw. der Verbrennungsintensität der auf dem Feuerungsrost befindlichen Brennstoffschicht ausgehend vom Sauerstoffgehalt der Umgebungsluft erhöht wird, und daß die Sekundärluft örtlich hinsichtlich der Zusammensetzung, der Menge, des Zuführungsortes und einer hohen Turbulenz in der Sekundärverbrennungszone so eingestellt wird, daß die Bildung von Stickstoffoxiden oberhalb der Brennstoffschicht weitestgehend vermieden wird. Durch die Anpassung an die örtlichen Gegebenheiten, d.h. durch Berücksichtigung der verschiedenen Zustände des Brennstoffes entlang des Feuerungsrostes, kann die Primärluft den jeweiligen Gegebenheiten angepaßt und so eingestellt werden, daß der gewünschte gesteigerte Verbrennungseffekt und damit die Verbrennung oxidierbarer Schadstoffe eintritt. Hierfür bedient man sich beispielsweise bekannter Thermoelemente zu Temperaturmessungen oder von Infrarotkameras zur Erfassung der von der Brennschicht unmittelbar ausgehenden Festkörperstrahlung, die auf die Brennbettemperatur, d.h. die Temperatur der im Abbrand befindlichen Brennstoffmasse schließen läßt, um den Sauerstoffanteil, der notwendig ist, um eine gesteigerte Verbrennungsintensität herbeizuführen, an der jeweiligen Stelle des Verbrennungsrostes einzustellen, was beispielsweise durch eine entsprechende Unterteilung der Unterwindführung für den Verbrennungsrost möglich ist. Hierfür gibt es bereits einen einschlägigen Vorschlag aus der DE 38 25 931 C2. Entscheidend hierbei ist nicht die bekannte Tatsache, den Sauerstoffanteil grundsätzlich regeln zu können, sondern entscheidend ist vielmehr, daß bei der vorliegenden Erfindung der Sauerstoffanteil so stark erhöht wird, daß eine Verbrennungsintensität und die hiermit verbundene Verringerung oxidierbarer Schadstoffe erreicht wird, die bisher wegen der zu erwartenden Nachteile nicht betrieben wurde. Diese Nachteile, die z.B. in der thermischen Bildung von Stickoxiden und der Überhitzung der Schutzauskleidung des Feuerraumes zu sehen sind, werden bei der vorliegenden Erfindung aber dadurch vermieden, daß über der Brennschicht gezielte Dämpfungsmaßnahmen hinsichtlich der Temperaturentwicklung und der Einstellung sonstiger Bedingungen eingeleitet werden, damit die zu erwartenden Nachteile nicht eintreten. Zu diesen dämpfenden Maßnahmen gehört grundsätzlich die Reduzierung des Sauerstoffanteiles, wie dies bereits weiter oben erläutert wurde. Dabei ist es von großem Einfluß, welche Mengen an Sekundärluft, an welcher Stelle in bezug auf die Brennstoffschicht bzw. des Feuerraumes und mit welcher Turbulenz die als Sekundärluft bezeichnete Gasmenge über die Sekundärluftdüsen zugeführt werden. Besonders vorteilhaft wirkt sich die Erzeugung einer hohen Turbulenz aus, da hierdurch eine häufig ungleichmäßige Sauerstoffverteilung ausgeglichen und der vorhandene Sauerstoff somit besser genutzt werden kann, wodurch bei verhältnismäßig niedrigen Temperaturen der gewünschte Verbrennungsablauf in dem Sekundärverbrennungsbereich erzielbar ist. Mit Hilfe von Temperaturmessungen und Beobachtungen mittels Infrarotkameras oder Flammenwächtern ist es möglich die Bedingungen im Sekundärverbrennungsbereich so einzustellen, daß für die Feuerraumauskleidung sowie für die Bildung von Stickstoffoxiden schädliche Temperaturen unterbunden werden, nachdem z.B. bekannt ist, daß die Temperatur von 1.300°C einen Grenzwert darstellt, oberhalb dessen mit der vermehrten Bildung von Stickstoffoxiden gerechnet werden muß.

Je nach Art der zu verbrennenden Stoffe kann es vorteilhaft sein, den Sauerstoffgehalt der Primärluft nur in der Hauptverbrennungszone der Primärverbrennungszone der Rostfeuerung zu erhöhen, weil in den anderen Bereichen der Brennstoff zunächst vorgewärmt wird oder bereits einen zu geringen Brennwert besitzt, wie dies beispielsweise bei der Ausbrandzone der Fall ist.

Bevorzugte Parameter für die Regelung des Sauerstoffgehaltes sind in bezug auf die Primärverbrennungsluft die Oberlfächentemperatur des Brenngutes und in bezug auf die Sekundärluft die in der Sekundärverbrennungszone herrschende Temperatur bzw. die Länge der Flammen in vertikaler Ausdehnung im Feuerraum.

Das zurückzuführende Abgas wird vorzugsweise nach Durchströmen des Kessels abgesaugt, wodurch die sich aus der Abgasrückführung ergebende Verminderung des Gasvolumens erst bei der Abgasreinigungsanlage bemerkbar macht. In besonders gelagerten Fällen kann es auch möglich sein, das zurückzuführende Abgas unmittelbar oberhalb der Brennstoffschicht abzusaugen.

Die Einstellung des Sauerstoffgehaltes in der Primärluft und damit die bewußte Steigerung der Verbrennungsintensität in der Primärverbrennungszone auf dem Feuerungsrost kann ohne Rücksicht auf die späteren Folgen, die durch die erfindungsgemäßen Dämpfungsmaßnahmen ausgeschaltet werden, soweit vorangetrieben werden, daß der Verbrennungsprozeß auf dem Feuerungsrost im wesentlichen durch Bedingungen begrenzt ist, die sich aus der Betriebsfähigkeit des Verbrennungsrostes ergeben. Eine Temperatursteigerung in der Brennschicht von bis zu 300°C gegenüber den üblichen Verbrennungsprozessen ist dabei möglich. Da die Brennbettemperatur bis zu 300°C höher liegen kann, als bei einer Verbrennung mit normaler Außenluft, ergibt sich ein höherer Einbindegrad von Schadstoffen in der Schlacke. Die hierdurch verminderte Auslaugbarkeit der Schadstoffe verbessert die Möglichkeit der Verwendung der Schlacke als Baustoff oder senkt die Anforderungen an die Rückstandsdeponie.

Grundsätzlich ergeben sich aus der Sauerstoffanreicherung in der Primärverbrennungsluft verschiedene erhebliche Vorteile. Bereits ausführlich hervorgehoben wurde die Tatsache, daß die Gesamtmenge an Gasvolumen bis zu zwei Drittel gesenkt werden konnte, wodurch sich eine kleinere Dimensionierung der gesamten Anlage und damit eine erhebliche Kostensenkung ergibt. Durch die Erhöhung des Sauerstoffgehaltes in der Primärluft ergibt sich zwangsläufig eine drastische Reduzierung des zugeführten Stickstoffanteiles, der lediglich als Ballast anzusehen ist und bisher den thermischen Wirkungsgrad erheblich vermindert hat. Diese Verminderungswirkung auf den thermischen Wirkungsgrad fällt durch die Verminderung des Stickstoffanteiles entsprechend ab, so daß der thermische Wirkungsgrad verbessert wird. Die Erhöhung des Sauerstoffanteiles hat dort seine Grenzen, wo eine thermische Überbelastung der einzelnen Rostelemente eintreten könnte. In der Praxis hat sich gezeigt, daß der Sauerstoffanteil bis zu 50 Vol.% der zugeführten Primärluftmenge ausmachen kann, ohne daß es zu Schädigungen der Rostelemente kommt. Durch die Verminderung des Gasvolumenstromes wird der Mitreißeffekt auf leichte und kleine Abfallpartikel vermindert, so daß diese auf dem Rost oder unmittelbar darüber verbrennen und nicht als unverbrannte Teile in die Reinigungsanlage gelangen. Staubabscheider können somit zusätzlich zu der möglichen Verkleinerung durch das geringere Abgasvolumen, schwächer dimensioniert werden. Die deutlich intensivere Verbrennung, die aufgrund der Erfindung eingestellt wird, führt nicht nur zu höheren Temperaturen der Brennstoffpartikel auf dem Rost selbst, sondern bewirkt auch eine Erhöhung der Gastemperaturen unmittelbar über der Brennstoffschicht, was zu einer Verminderung der Kohlenmonoxid- und Rest-Kohlenwasserstoffkonzentrationen führt. Weiterhin wird die Konzentration der sogenannten Precursor-Verbindungen abgesenkt, die im Bereich der späteren Abkühlung der Verbrennungsgase zur Bildung von Dioxinen und Furanen führen können.

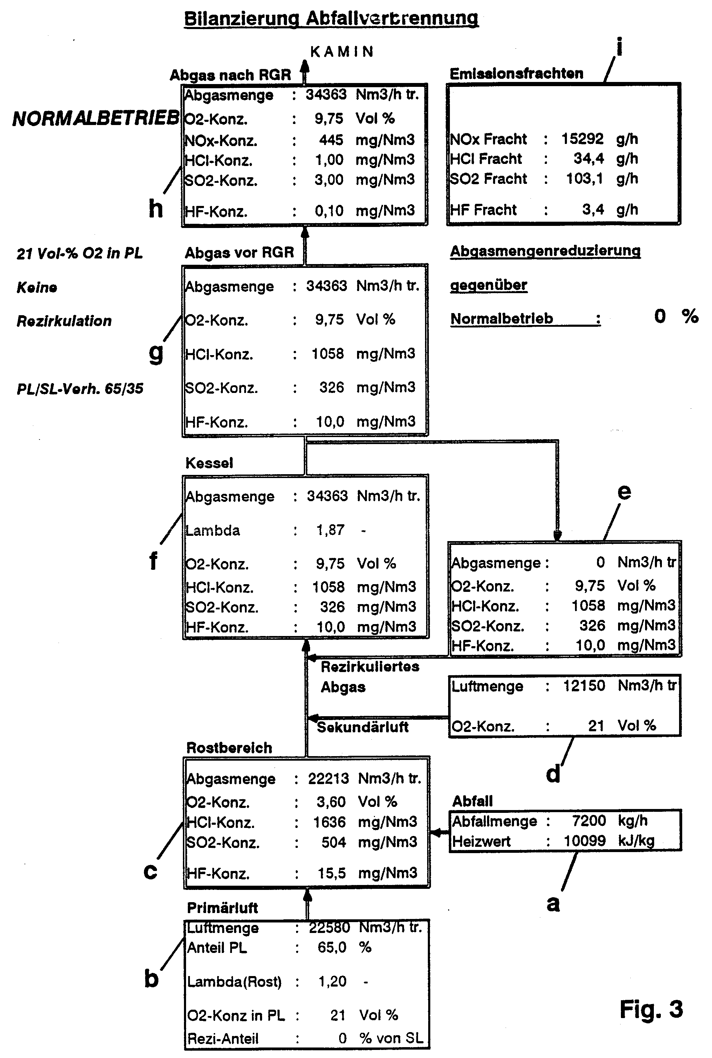

Durch die drastische Drosselung des Verbrennungsprozesses in dem Sekundärverbrennungsbereich vorzugsweise durch Rückführung von Abgas werden die Nachteile vermieden, die durch die bisherige Sauerstoffanreicherung oberhalb des Rostes eingetreten sind. Bei Zuführung von Umgebungsluft in den Sekundärverbrennungsbereich ist eine Überhitzung dieses Bereiches festgestellt worden. Das Ergebnis drückt sich in einem höheren Anteil an thermisch gebildeten Stickstoffoxiden und einer langfristig, nicht zu vermeidenden Zerstörung der keramischen Schutzauskleidung des Brennkammerbereiches aus. Diese Nachteile werden durch die drastische Drosselung des Verbrennungsablaufes oberhalb der Brennschicht, d.h. im Sekundärverbrennungsbereich, vermieden. Die im Sekundärverbrennungsbereich notwendige Durchmischung, um ein O₂-Konzentrationsgefälle zwischen Rezirkulationsgas und Verbrennungsgas aus der Primärverbrennungszone zu vermeiden, wird durch die Zuführung des Rezirkulationsgases in die Sekundärverbrennungszone erreicht, wobei die hier zugeführte Gasmenge ausreichend ist, um für die erforderliche Turbulenz zu sorgen. Die geringere Staubaufwirbelung in und oberhalb der Brennstoffschicht führt zusätzlich zu der bereits erwähnten geringeren Auslegung von Staubfiltern, auch zu einer geringeren Verschmutzung der Heizflächen im Kessel und somit ebenfalls zu günstigeren Betriebsbedingungen bezüglich Kessel-Verfügbarkeit, Reisezeit zwischen zwei Heizflächenreinigungen und Kesselwirkungsgrad. Durch die starke Verminderung der Gasmenge ergibt sich bei gleichbleibender Brennstoffmenge zwangsweise eine proportionale Erhöhung der Konzentration der verschiedenen durch die Abgasreinigungsanlage abzuscheidenen Schadstoffe wie dies aus den in den Figuren 3 bis 6 aufgezeigten Diagrammen hervorgeht. Für den Fall, daß in der Abgasreinigung eine Wertstoffrückgewinnung vorgesehen ist, wird beispielsweise bei der Gewinnung von Salzsäure und Gips aus abgeschiedenen Schadstoffen die Wirksamkeit und der Aufwand dieses Prozesses wesentlich verbessert.

Die Erfindung wird nachstehend anhand einer Feuerungsanlage zur Durchführung des Verfahrens in Verbindung mit Diagrammen, die verschiedene Versuchsergebnisse aufzeigen, beispielsweise erläutert. Die in der beigefügten Zeichnung dargestellten Figuren zeigen:

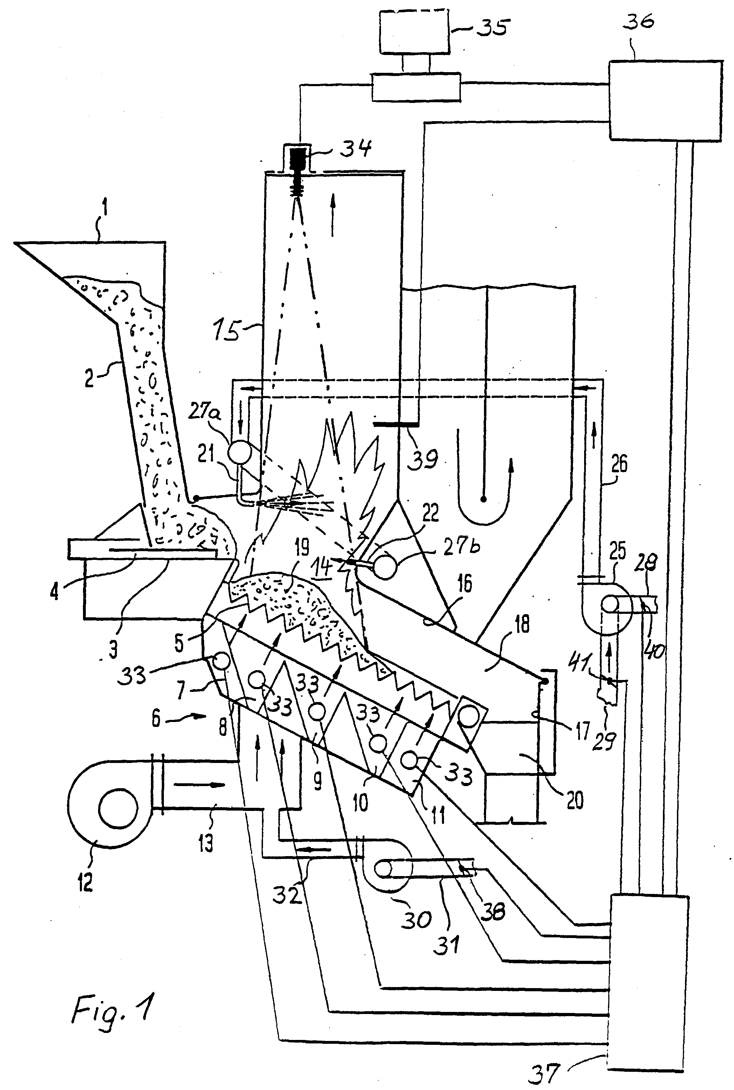

- Figur 1:: einen Längsschnitt durch eine Feuerungsanlage;
- Figur 2:: ein Diagramm betreffend die Abgasmengenreduzierung bei verschiedenen Sauerstoffkonzentrationen in der Primärluft und verschiedenen Anteilen der Rezirkulationsmenge bezogen auf die Sekundärluftmenge;
- Figur 3:: ein Versuchsergebnis beim Betrieb einer Feuerungsanlage unter Verwendung von Außenluft als Primärluft und ohne Abgasrückführung der Sekundärluft;
- Figur 4:: ein Versuchsergebnis beim Betrieb einer Feuerungsanlage mit einem Sauerstoffanteil von 35 Vol. % ohne Abgasrückführung;
- Figur 5:: ein Versuchsergebnis beim Betrieb einer Feuerungsanlage bei 35 Vol. % Sauerstoff in der Primärluft und vollständiger Abgasrückführung; und
- Figur 6:: ein Versuchsergebnis beim Betrieb einer Feuerungsanlage bei 50 Vol.% Sauerstoff in der Primärluft und 100% Abgasrückführung.

Wie aus der Zeichnung ersichtlich weist eine Feuerungsanlage zur Durchführung des erläuterten Verfahrens einen Aufgabetrichter 1 mit anschließender Aufgabeschurre 2 für die Aufgabe des Brenngutes auf einen Aufgabetisch 3 auf, auf dem Beschickkolben 4 hin- und herbewegbar vorgesehen sind, um das aus der Aufgabeschurre kommende Brenngut auf einen Feuerungsrost 5 aufzugeben, auf dem die Verbrennung des Brenngutes stattfindet. Hierbei ist es unerheblich, ob es sich um einen geneigten oder horizontal liegenden Rost, egal welchen Prinzips, handelt.

Unterhalb des Feuerungsrostes 5 ist eine insgesamt mit 6 bezeichnete Einrichtung zur Zuführung von Primärverbrennungsluft angeordnet, die mehrere Kammern 7 bis 11 umfassen kann, denen mittels eines Ventilators 12 über eine Leitung 13 Primärverbrennungsluft zugeführt wird. Durch die Anordnung der Kammern 7 bis 11 ist der Feuerungsrost in mehrere Unterwindzonen unterteilt, so daß die Primärverbrennungsluft entsprechend den Bedürfnissen auf dem Feuerungsrost unterschiedlich eingestellt werden kann. Diese Unterwindzonen können je nach Breite des Feuerungsrostes auch in Querrichtung unterteilt sein, so daß entsprechend den örtlichen Gegebenheiten die Primärluftzufuhr geregelt werden kann.

Über dem Feuerungsrost 5 befindet sich der Feuerraum 14, der im oberen Teil in einen Abgaszug 15 übergeht, an den sich nicht dargestellte Aggregate, wie z.B. ein Abhitzekessel und eine Abgasreinigungsanlage anschließen. Im hinteren Bereich ist der Feuerungsraum 14 durch eine Decke 16, eine Rückwand 17 und Seitenwände 18 begrenzt.

Die Verbrennung des mit 19 bezeichneten Brenngutes erfolgt auf dem vorderen Teil des Feuerungsrostes 5, über dem sich der Abgaszug 15 befindet. In diesem Bereich wird durch die Kammern 7, 8 und 9 die meiste Primärverbrennungsluft zugeführt. Auf dem hinteren Teil des Feuerungsrostes 5 befindet sich nur ausgebranntes Brenngut, d.h. Schlacke und diesem Bereich wird Primärverbrennungsluft über die Kammern 10 und 11 im wesentlichen nur zur Kühlung dieser Schlacke zugeführt.

Die ausgebrannten Teile fallen dann in einen Schlackenaustrag 20 am Ende des Feuerungsrostes 5. Im unteren Bereich des Abgaszuges 15 sind Reihen von Sekundärluftdüsen 21 und 22 vorgesehen, die Sekundärverbrennungsluft dem aufsteigenden Abgas zuführen, um eine Nachverbrennung der im Abgas befindlichen brennbaren Anteile zu bewirken.

Die Sekundärluftdüsenreihen 21 und 22 sind an Luftsammler 27a und 27b angeschlossen, die über eine Leitung 26 durch ein Gebläse 25 gespeist werden, welches einerseits über eine Leitung 28 Abgas von einem weiter hinten liegenden Teil der Verbrennungsanlage und gegebenenfalls über eine Leitung 29 Umgebungsluft ansaugt.

Aus einer nicht dargestellten Luftzerlegungsanlage wird durch ein Gebläse 30 über eine Leitung 31 entweder reiner Sauerstoff oder sauerstoff-angereicherte Umgebungsluft angesaugt und über die Leitung 32 der Leitung 13 für die Primärverbrennungsluft zugeführt. Die Einstellung der jeweiligen Luftmengen in den Kammern 7 bis 11 erfolgt durch Regeleinrichtungen 33, die die Zufuhr des Luft-Sauerstoffgemisches zu den einzelnen Kammern 7 bis 11 regeln. Selbstverständlich kann jede Kammer 7 bis 11 eine separate Sauerstoffleitung aufweisen, um den Sauerstoffgehalt der Primärluft in einzelnen Kammern unterschiedlich einstellen zu können.

Zur Regelung des Verbrennungsverfahrens sind eine Video- bzw. Thermografiekamera 34, ein Monitor 35, ein frei programmierbarer Rechner 36 und eine Regler-Einheit 37 vorgesehen. Die Videokamera oder Thermografiekamera 34 ist so ausgerichtet, daß sie durch den Feuerraum 14 hindurch das Brenngut 19 auf dem Feuerungsrost 5 von oben betrachten kann. Die Videokamera ist mit dem Monitor 35 und dem frei programmierbaren Rechner 36 verbunden, der das empfangene Bild entsprechend auflöst und die so erhaltenen Digitalwerte, die ein Maß für die Helligkeit auf der jeweiligen Verbrennungszone darstellen, mit vorgegebenen Richtwerten vergleicht und bei Abweichung einen entsprechenden Regelvorgang über die Regler-Einheit 37 auslöst, die die Regeleinrichtungen 33, die als Klappen oder Schieber ausgebildet sind, in den einzelnen Kammern 7 bis 11 verstellt. Die Videokamera 34 liefert somit aufgrund der empfangenen, von der Brennschicht 19 ausgehenden Festkörperstrahlung Werte, die auf die Temperatur der Brennschicht 19 zurückschließen lassen. Durch die Verstellung der Regeleinrichtungen 33 wird die Menge der Primärluft und durch die Verstellung der Regeleinrichtung 38 in der Leitung 31 wird über die Regler-Einheit 37 der Sauerstoffgehalt der Primärluft eingestellt. Die Einstellung der Menge der Primärluft und die Einstellung des Sauerstoffgehaltes erfolgt in Abhängigkeit von dem Abbrandverhalten der Brennschicht 19 auf dem Feuerungsrost 5 in der weils überwachten Zone des Feuerungsrostes. Im Bereich der verbrennungszone sind Thermoelemente vorgesehen, von denen in der Zeichnung nur ein Thermoelement 39 dargestellt ist. Das Thermoelement 39 dient zur Überwachung der Temperatur in der Sekundärverbrennungszone und ist mit dem frei programmierbaren Rechner 36 verbunden, der seinerseits mit der Regler-Einheit 37 in Verbindung steht. Dieser stellt über Regeleinrichtungen 40 und 41 die Menge des zu den Sekundärluftdüsen 21 und 22 zuzuführenden Abgases und gegebenenfalls die Menge der Umgebungsluft ein, die über die Regeleinrichtung 41 eingestellt wird. Anstelle von Thermoelementen 39 kann auch eine Temperaturmessung mittels Schall-Pyrometer (Pyrosonic) oder nach der Laser-Doppler-Methode erfolgen.

Mit Hilfe dieser Regeleinrichtung und den entsprechenden Überwachungseinrichtungen ist es möglich den intensiven Abbrand auf dem Feuerungsrost durch Regelung der Primärluftmenge und des Sauerstoffanteiles in der Verbrennungsluft und das Verhalten in der Sekundärverbrennungszone durch Einstellung der Sekundärluft zu regeln, die zum größten Teil aus rückgeführtem Abgas besteht. Hierdurch wird ein zu starkes Ansteigen der Temperatur im Sekundärverbrennungsbereich vermieden und die durch die Gesamtanlage geführte Gasmenge wird reduziert. Dabei ist die Reduzierung der Gasmenge am größten, wenn keine zusätzliche Umgebungsluft angesaugt wird. Die Menge der Primärluft wird gegenüber bisher bekannten Verbrennungsanlagen dadurch gesenkt, daß der Sauerstoffgehalt der Primärluft gegenüber der Umgebungsluft angehoben und damit der als Ballast wirkende Stickstoff vermindert wird.

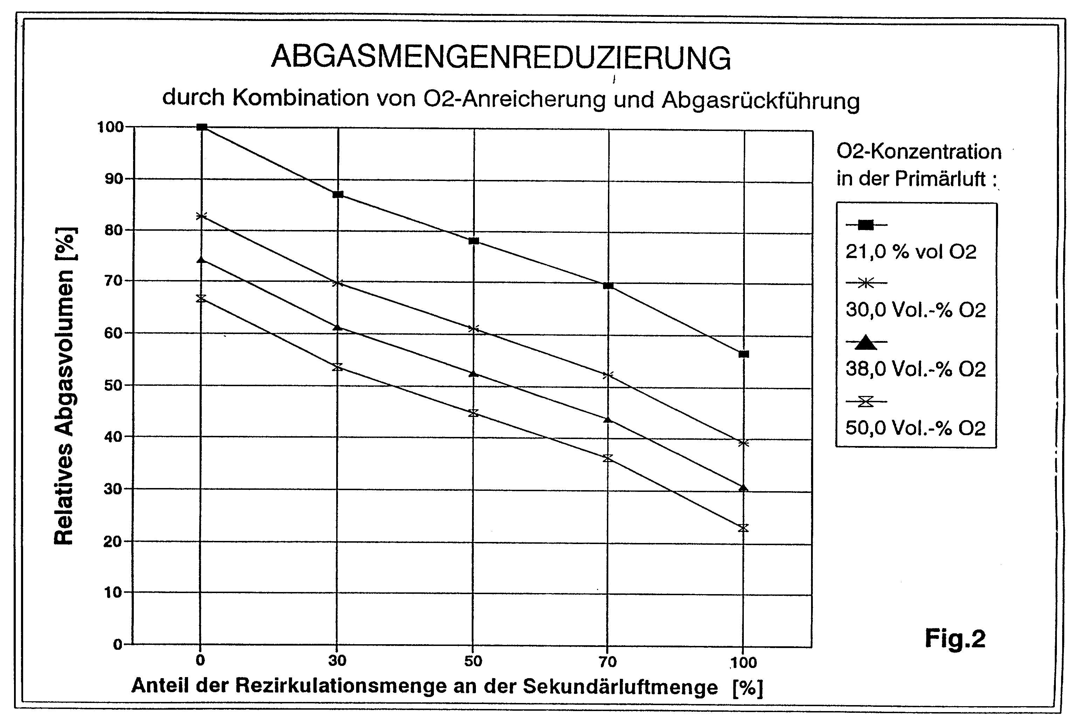

In Figur 2 ist in einem Diagramm die erzielbare Abgasmengenreduzierung in Abhängigkeit von der Sauerstoffkonzentration der Primärluft einerseits und dem Anteil der Rezirkulationsmenge an der Sekundärluftmenge andererseits dargestellt. Auf der Abzisse ist das relative Abgasvolumen von 0 bis 100% und auf der Ordinate der Anteil der Rezirkulationsmenge an der Sekundärluftmenge von 0 bis 100% aufgetragen. Die vier eingezeichneten Kurven geben die Abgasmengenreduzierung in Abhängigkeit von der Sauerstoffkonzentration der Primärluft wieder.

In den Figuren 3 bis 6 sind verschiedene Versuchsergebnisse zusammengestellt. Zum besseren Verständnis werden zunächst die dort verwendeten Formeln und Abkürzungen erläutert:
- O2-Konz. =: Sauerstoffkonzentration
- NOₓ-Konz. =: Stickoxid-Konzentration
- HCL-Konz. =: Chlor-Wasserstoff-Konzentration
- SO2-Konz. =: Schwefeldioxid-Konzentration
- HF-Konz. =: Fluor-Wasserstoff-Konzentration
- RGR =: Rauchgasreinigung
- PL =: Primärluft
- SKL =: Sekundärluft
- Rezi-Anteil =: Anteil der Rezirkulationsmenge an der Sekundärluft
- Lambda =: Luftüberschußfaktor

Bei sämtlichen nachfolgend beschriebenen Versuchen wird die Anlage mit aus Abfall bestehendem Brennstoff beschickt, wobei die stündliche Aufgabemenge und der Heizwert bei allen Versuchen konstant gehalten wird, damit bei gleichen Ausgangsbedingungen betreffend den Brennstoff die Auswirkungen der erfindungsgemäßen Maßnahmen deutlich werden.

In sämtlichen Versuchsdiagrammen sind im Feld a die stündlich aufgegebene Abfallmenge und der Heizwert, im Feld b die Primärluftmenge, der Anteil der Primärluft an der Gesamtverbrennungsluft, der Lambda-Wert, die Sauerstoffkonzentration in der Primärluft und der Rezirkulationsanteil angegeben. Im Feld c sind die im Rostbereich anfallende Abgasmenge, die Sauerstoffkonzentration und die Konzentration der wesentlichen Schadstoffteile aufgeführt. Das Feld d gibt die Menge und die Sauerstoffkonzentration der Sekundärluft an. Im Feld e sind die Abgasmenge, die Sauerstoffkonzentration im Abgas sowie die Mengen der verschiedenen Schadstoffe angegeben. Im Feld f sind die durch den Kessel strömende Abgasmenge, der im Kessel gemessene Luftüberschußfaktor, die Sauerstoffkonzentration sowie die Konzentrationen der verschiedenen Schadstoffe in mg/Nm³ zusammengetragen. In den Feldern g und h sind die Abgasmenge, die Sauerstoffkonzentration sowie die Konzentrationen der verschiedenen Schadstoffe jeweils vor und nach der Rauchgasreinigung zusammengestellt. Im Feld i sind die Schadstofffrachten in g/h angegeben, die den Kamin nach der Rauchgasreinigung verlassen. Unterhalb des Feldes i ist die Abgasmengenreduzierung in Prozent angegeben.

In Figur 3 sind die Versuchsergebnisse bei Normalbetrieb einer Feuerungsanlage zusammengetragen. Bei diesem Normalbetrieb wird die Anlage mit normaler Außenluft als Primärluft sowie mit normaler Außenluft als Sekundärluft betrieben. Hierbei beträgt das Verhältnis von Primärluft zu Sekundärluft 65 : 35. Da für die Sekundärluft normale Außenluft verwendet wird, findet keine Abgasrückführung statt.

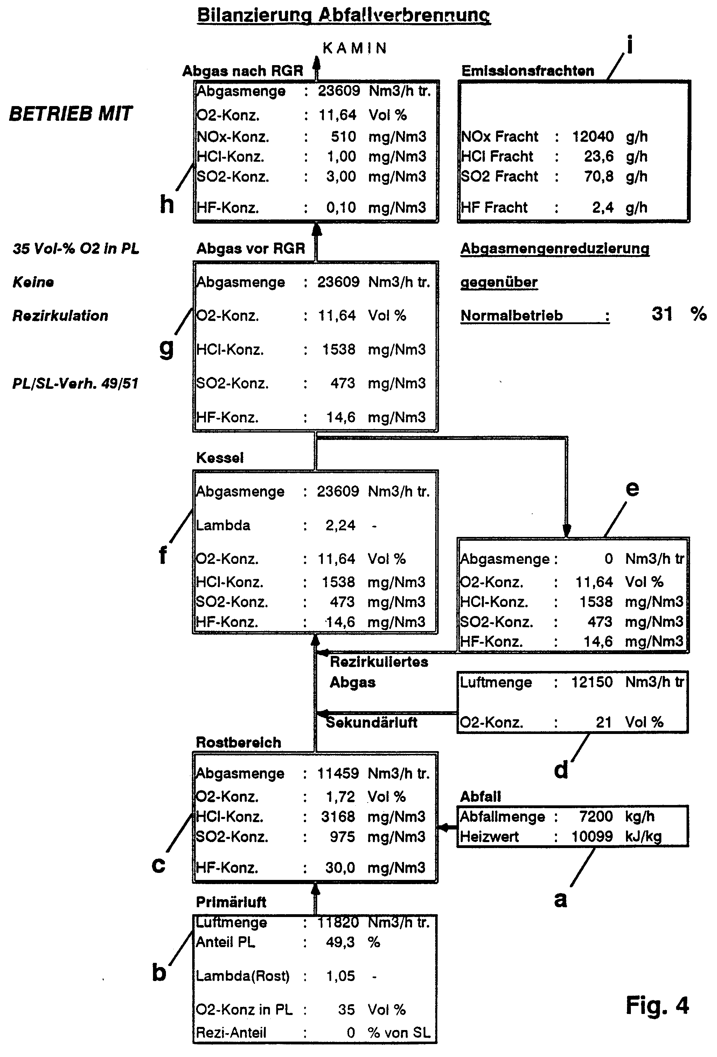

Während im ersten Versuch, der in Figur 3 zusammengestellt ist, der Normalbetrieb wiedergegeben wird, sind aus den Diagrammen der Figuren 4 bis 6 die erzielbaren Abgasmengenreduzierungen in Prozent gegenüber dem Normalbetrieb und die anfallenden Schadstofffrachten als wesentliche Ergebnisse des Verbrennungsverfahrens nach der Erfindung erkennbar.

Bei dem in Figur 4 wiedergegebenen Versuchsergebnis wurde die Anlage mit einem Sauerstoffgehalt von 35 Vol.% in der Primärluft, einem Verhältnis von Primärluft zu Sekundärluft von 49,3 : 50,7 ohne Abgasrückführung betrieben, wobei für die Sekundärluft normale Außenluft verwendet wurde. Hier konnte gegenüber dem Normalbetrieb nach Figur 3 eine Abgasmengenreduzierung von 31% erzielt werden. Die den Kamin verlassende stündliche Schadstofffracht der oxidierbaren Schadstoffe konnte gegenüber dem Normalbetrieb bereits erheblich vermindert werden, wie dies aus dem Vergleich der im Feld i angegebenen Zahlen hervorgeht. Dagegen erhöhte sich der NOₓ-Anteil leicht gegenüber Figur 3, was auf den erhöhten Sauerstoffgehalt in der Primärluft zurückzuführen ist. Die NOₓ-Fracht ist jedoch wegen der verringerten Abgasmenge geringer.

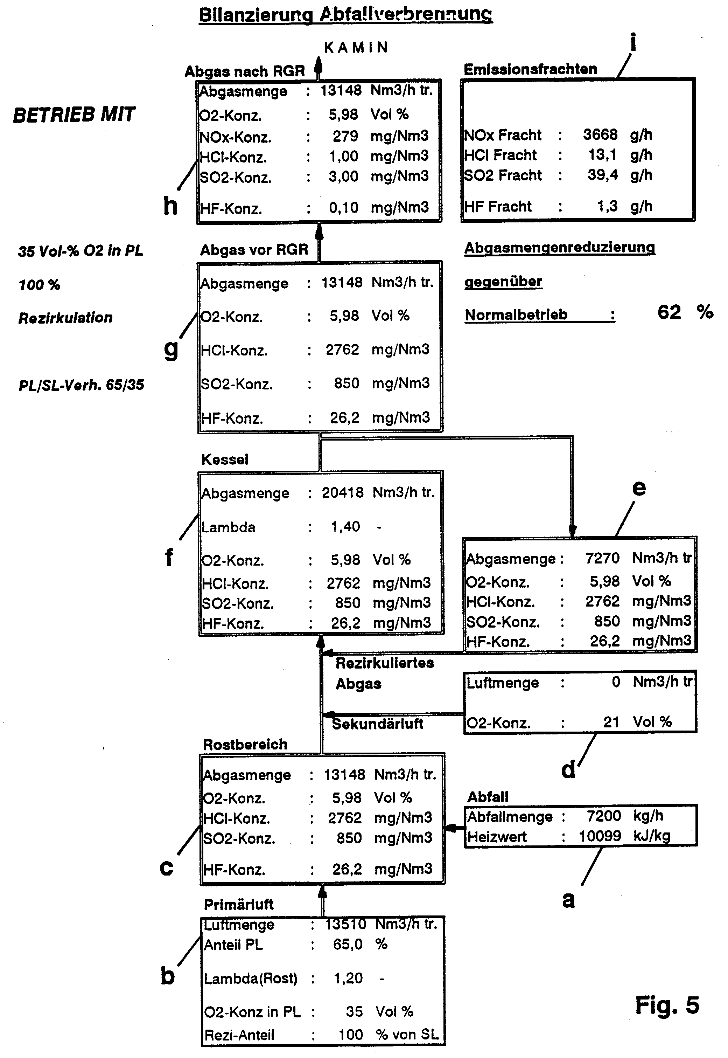

Aus einem weiteren in Figur 5 zusammengestellten Versuchsergebnis ist eine Abgasmengenreduzierung von 62% gegenüber dem Normalbetrieb und eine weitere drastische Reduzierung der den Kamin verlassenden Schadstofffracht feststellbar. Dabei wurde die Anlage mit einem Sauerstoffgehalt von 35 Vol.% in der Primärluft, einem Verhältnis von Primärluft zu Sekundärluft von 65 : 35 bei einer Rezirkulation von 100% betrieben. Die starke Verminderung des NOₓ-Anteiles trotz hohem Sauerstoffanteil in der Primärluft ist auf die Dämpfungsmaßnahmen durch die Abgasrezirkulation zurückzuführen.

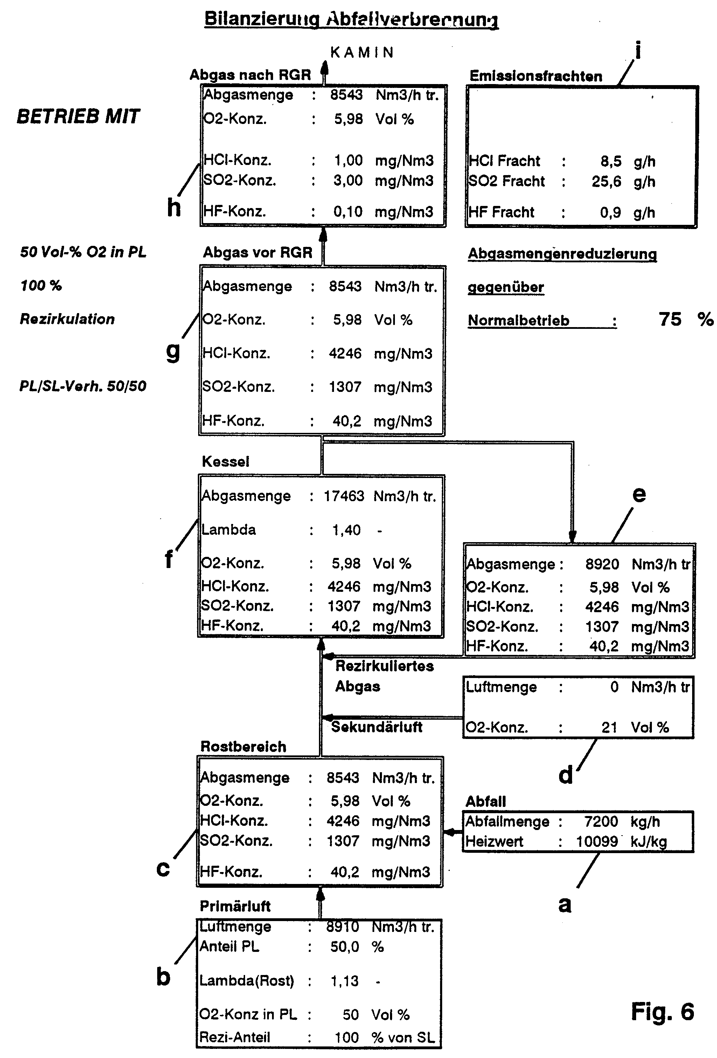

Bei dem in Figur 6 aufgezeichneten Versuch wurde die Anlage mit einem Sauerstoffgehalt von 50 Vol.% in der Primärluft, einem Verhältnis von Primärluft zu Sekundärluft von 50 : 50 bei 100% Rezirkulation betrieben. Hier wurde eine Abgasmengenreduzierung von 75% gegenüber dem Normalbetrieb erzielt. Vergleicht man die in Feld i angegebenen Schadstofffrachten dieses Versuches mit dem Normalbetrieb gemäß Figur 3, so stellt man fest, daß die HCL-Fracht von 34,4 g/h auf 8,5 g/h abgenommen hat, was einer Verminderung von rund 75% gegenüber dem Normalbetrieb entspricht. Bei den anderen Schadstofffrachten liegt die Reduzierung ebenfalls bei rund 75% gegenüber dem Normalbetrieb. Es ist also nicht nur eine Abgasmengenreduzierung von 75% beim Versuch nach Figur 6 gegenüber dem Normalbetrieb, sondern auch eine entsprechend hohe Reduzierung der Schadstofffracht erzielt worden.

Betrachtet man die Schadstoffkonzentrationen im Abgas nach der Rauchgasreinigung, beispielsweise im Falle des Versuches nach Figur 3, also im Normalbetrieb und die Schadstoffkonzentrationen beim Versuch nach Figur 6, wobei diese Werte jeweils im Feld h angegeben sind, so stellt man fest, daß die Werte identisch sind, während die entsprechenden Werte vor der Rauchgasreinigung bezogen auf den Normkubikmeter Abgas beim Versuch nach Figur 6 etwa viermal so hoch liegen wie beim Versuch nach Figur 3, also beim Normalbetrieb. Hieraus ist erkennbar, daß vor der Rauchgasreinigung durch die Abgasmengenreduzierung bezogen auf den Normkubikmeter Abgas eine wesentlich höhere, d.h. rund viermal so hohe Schadstoffkonzentration im Abgas vorliegt, wodurch dieses Abgas beispielsweise für die Salzsäuregewinnung und die Gipsgewinnung wesentlich bessere Voraussetzungen bietet als das Abgas beim Normalbetrieb - Beim Normalbetrieb muß nämlich ein sehr hoher Apparateaufwand betrieben werden, um ausgehend von den relativ geringen Schadstoffkonzentrationen die Salzsäuregewinnung und Gipsgewinnung zu ermöglichen.

## Patentansprüche

1. Verfahren zum Verbrennen von Brennstoffen, insbesondere Abfall, in Verbrennungsanalgen mit einer Rostfeuerung, bei dem Primärluft unter der Rostfeuerung in die Brennstoffschicht und Sekundärluft oberhalb der Brennstoffschicht zugeführt wird, **dadurch gekennzeichnet,** daß die Verbrennungsintensität des Brennstoffes auf dem Feuerungsrost zumindest in Teilbereichen desselben durch Erhöhung des Sauerstoffanteiles der Primärluft auf 25 bis 50 Vol% bei sich daraus ergebenden prozentueller Verminderung des Stickstoffanteiles der Primärluft gegenüber der Umgebungsluft gesteigert wird und daß über der Brennstoffschicht, nachdem die Beseitigung oxidierbarer Schadstoffe weitgehend abgeschlossen ist, die Verbrennungsintensität in der Sekundärverbrennungszone durch Verminderung des Sauerstoffanteiles in der Sekundärluft gegenüber der Umgebungsluft durch zurückgeführtes Abgas gedrosselt wird, wobei die rückgeführte Abgasmenge 20 bis 65% der gesamten, von der dem Verbrennungsprozeß zugeführten Luft- und Gasmenge ausmacht.

2. Verfahren nach Anspruch 1, **dadurch gekennzeichnet,** daß der Sauerstoffgehalt der Primärluft örtlich in Abhängigkeit vom Abbrandverhalten bzw. der Verbrennungsintensität der auf dem Feuerungsrost befindlichen Brennstoffschicht ausgehend vom Sauerstoffgehalt der Umgebungsluft erhöht wird und daß die Sekundärluft örtlich hinsichtlich der Zusammensetzung, der Menge, des Zuführungsortes und einer hohen Turbulenz in der Sekundärverbrennungszone so eingestellt wird, daß die Bildung von Stickstoffoxiden oberhalb der Brennstoffschicht weitestgehend vermieden wird.

3. Verfahren nach Anspruch 1 oder 2, **dadurch gekennzeichnet,** daß der Sauerstoffgehalt der Primärluft nur in der Hauptverbrennungszone der Primärverbrennungszone der Rostfeuerung erhöht wird.

4. Verfahren nach einem der Ansprüche 1 bis 3, **dadurch gekennzeichnet,** daß der Sauerstoffgehalt der Primärverbrennungsluft in Abhängigkeit von der Oberflächentemperatur des Brenngutes eingestellt wird.

5. Verfahren nach einem der Ansprüche 1 bis 4, **dadurch gekennzeichnet,** daß die Einstellung des Sauerstoffgehaltes in der Sekundärluft in Abhängigkeit von der Temperatur in der Sekundärverbrennungszone erfolgt.

6. Verfahren nach einem der Ansprüche 1 bis 5, **dadurch gekennzeichnet,** daß die Einstellung des Sauerstoffgehaltes in der Sekundärluft in Abhängigkeit von der Länge der Flammen in vertikaler Ausdehnung im Feuerraum erfolgt.

7. Verfahren nach einem der Ansprüche 1 bis 6, **dadurch gekennzeichnet,** daß das zurückzuführende Abgas nach Durchströmen des Kessels abgesaugt wird.

8. Verfahren nach einem der Ansprüche 1 bis 6, **dadurch gekennzeichnet,** daß das zurückzuführende Abgas unmittelbar oberhalb der Brennstoffschicht abgesaugt wird.

## Claims

1. Method for the combustion of fuels, particularly waste, in combustion plants with grate firing, in which primary air is fed under the grate into the fuel bed and secondary air is fed above the fuel bed, characterised in that the combustion intensity of the fuel on the grate is increased at least in parts thereof by increasing the oxygen content of the primary air to 25 to 50 % by volume with a resulting percentage reduction in the nitrogen content of the primary air relative to the ambient air and that above the fuel bed, once the removal of oxidisable harmful substances has been substantially completed, the combustion intensity in the secondary combustion zone is throttled by reducing the oxygen content in the secondary air relative to the ambient air by means of recycled waste gas, the recycled waste gas making up 20 to 65 % of the total quantity of air and gas fed into the combustion process.

2. Method according to claim 1, characterised in that the oxygen content of the primary air is increased locally as a function of the combustion behaviour or the combustion intensity of the fuel bed situated on the grate departing from the oxygen content of the ambient air and that the secondary air is adjusted locally with respect to composition, quantity, feed point and high turbulence in the secondary combustion zone so as to substantially prevent the formation of nitrogen oxides above the fuel bed.

3. Method according to claim 1 or claim 2, characterised in that the oxygen content of the primary air is only increased in the main combustion zone of the primary combustion zone of the grate.

4. Method according to one of claims 1 to 3, characterised in that the oxygen content of the primary combustion air is adjusted as a function of the surface temperature of the fuel.

5. Method according to one of claims 1 to 4, characterised in that the oxygen content in the secondary air is adjusted as a function of the temperature in the secondary combustion zone.

6. Method according to one of claims 1 to 5, characterised in that the oxygen content in the secondary air is adjusted as a function of the length of the flames in the vertical extent in the combustion chamber.

7. Method according to one of claims 1 to 6, characterised in that the waste gas to be recycled is exhausted after flowing through the boiler.

8. Method according to one of claims 1 to 6, characterised in that the waste gas to be recycled is exhausted immediately above the fuel bed.

## Revendications

1. Procédé pour la combustion de combustibles, en particulier de déchets, dans des installations de combustion avec une grille de foyer, selon lequel de l'air primaire est introduit sous la grille de foyer dans la couche de combustible et de l'air secondaire est introduit au-dessus de la couche de combustible, caractérisé en ce que la puissance de combustion du combustible sur la grille de foyer est augmentée au moins dans des zones partielles de celle-ci au moyen d'une augmentation de la teneur en oxygène de l'air primaire jusqu'à un niveau compris entre 25 et 50% en volume, provoquant une réduction proportionnelle de la proportion d'azote de l'air primaire par rapport à l'air ambiant, et en ce qu'au dessus de la couche de combustible, après qu'une suppression des substances nocives oxydables s'est achevée dans une large mesure, la puissance de combustion dans la zone de combustion secondaire est diminuée, en réduisant la teneur en oxygène de l'air secondaire par rapport à l'air ambiant, au moyen de gaz de combustion recyclé, le volume de gaz de combustion recyclé représentant entre 20 et 65% du volume total de l'air et du gaz utilisé pour le procédé de combustion.

2. Procédé selon la revendication 1, caractérisé en ce que la teneur en oxygène de l'air primaire est augmentée localement, en fonction du comportement de la combustion resp. de la puissance de la combustion de la couche de combustible se trouvant sur la grille de foyer, en partant de la teneur en oxygène de l'air ambiant, et en ce que l'air secondaire est réglé localement, pour ce qui est de la composition, du débit, de l'endroit d'alimentation, et d'une turbulence élevée dans la zone de combustion secondaire, de telle manière que la formation d'oxydes d'azote au-dessus de la couche de combustible est évitée au maximum.

3. Procédé selon la revendication 1 ou 2, caractérisé en ce que la teneur en oxygène de l'air primaire est augmentée uniquement dans la zone de combustion principale de la zone de combustion primaire de la grille de foyer.

4. Procédé selon l'une des revendications 1 à 3, caractérisé en ce que la teneur en oxygène de l'air de combustion primaire est réglée en fonction de la température de surface du combustible.

5. Procédé selon l'une des revendications 1 à 4, caractérisé en ce que le réglage de la teneur en oxygène dans l'air secondaire est effectué en fonction de la température dans la zone de combustion secondaire.

6. Procédé selon l'une des revendications 1 à 5, caractérisé en ce que le réglage de la teneur en oxygène dans l'air secondaire est effectué en fonction de la longueur de flamme dans le sens vertical à l'intérieur du foyer de combustion.

7. Procédé selon l'une des revendications 1 à 6, caractérisé en ce que le gaz de combustion à recycler est aspiré après être passé à travers la chaudière.

8. Procédé selon l'une des revendications 1 à 6, caractérisé en ce que le gaz de combustion à recycler est aspiré immédiatement au-dessus de la couche de combustible.
